# EUROPEAN PATENT APPLICATION

(11) **EP 2 846 599 A1**
(43) Date of publication of application: **11.03.2015**
(21) Application number: 14176521.4
(22) Date of filing: 10.07.2014
(51) Int. Cl.: H04W 76/02, H04W 48/16, H04W 48/20

(54) **Method of performing location registration procedures and related communication system**

(30) Priority: 02.09.2013 US 201361872771 P; 07.05.2014 US 201414272480
(71) Applicant: Acer Incorporated, New Taipei City 221 (TW)
(72) Inventor: Chuang, Ming-Dao, 221 New Taipei City (TW)
(74) Representative: Straus, Alexander

(57) **Abstract**

A communication system includes a user equipment and a network having a first cellular station and a second cellular station. When an attempt to establish an RRC connection between the first cellular station and the user equipment fails, the user equipment is configured to perform another RRC connection establishment procedure on the second cellular station. Therefore, when certain cellular stations within the network are busy, the present invention can improve the success rate of location registration procedures by requesting RRC connection with other available and less busy cellular stations within the network.

## Description

### Field of the Invention

The present invention is related to a method of performing location registration procedures and related communication system.

### Background of the Invention

In a typical mobile communications environment, a user equipment (UE) may communicate voice and/or data signals with one or more service networks. The wireless communications between the UE and the service networks may be in compliance with various wireless technologies, such as the Global System for Mobile communications (GSM) technology, Universal Mobile Telecommunications System (UMTS) technology, General Packet Radio Service (GPRS) technology, Enhanced Data rates for Global Evolution (EDGE) technology, Wideband Code Division Multiple Access (WCDMA) technology, Code Division Multiple Access 2000 (CDMA 2000) technology, Time Division-Synchronous Code Division Multiple Access (TD-SCDMA) technology, Worldwide Interoperability for Microwave Access (WiMAX) technology, Long Term Evolution (LTE) technology, and others.

In general, a UE is configured to camp on a cellular station with best reception, and perform a location registration procedure via the cellular station to register itself to the service network to which the cellular station belongs. If the user of the UE is attending a football game, a live concert, firework celebrations, or other events which involve many participants, a cellular station may receive many radio resource control (RRC) connection requests from different UEs during the same period, thereby being too busy to respond each UE immediately. Since such events normally last for a period of time, the cellular station to which the UE repeatedly sends RRC connection requests may remain busy and cause the location registration procedure to fail for a while. As a result, there is a need for improving the success rate when performing location registration procedures in order to guarantee real-time user experience.

### Summary of the Invention

The present invention aims at providing a method of performing location registration procedures and related communication system which can therefore improve the success rate of location registration procedures by requesting RRC connection with other available and less busy cells within the network.

This is achieved by methods of performing a location registration procedure according to claims 1 and 5 and a communication system for performing a location registration procedure according to claim 9. The dependent claims pertain to corresponding further developments and improvements.

As will be seen more clearly from the detailed description following below, the claimed method of performing a location registration procedure includes a user equipment acquiring a candidate list by scanning multiple cellular stations within a network; the user equipment selecting a first cellular station from the candidate list as a target cellular station; the user equipment sending a first RRC connection request to the target cellular station; the user equipment moving the first cellular station from the candidate list to a standby list if the user equipment does not receive a response message from the target cellular station when a first predetermined period has elapsed following the sending of the RRC connection request; the user equipment selecting a second cellular station from the candidate list as the target cellular station; and the user equipment sending a second RRC connection request to the target cellular station.

As will be seen more clearly from the detailed description following below, the claimed method of performing a location registration procedure includes a user equipment selecting a first cellular station within a network and not included in a standby list as a target cellular station; the user equipment sending a first RRC connection request to the target cellular station; , the user equipment adding the first cellular station to the standby list if the user equipment does not receive a response message from the target cellular station when a first predetermined period has elapsed following the sending of the RRC connection request; the user equipment selecting a second cellular station within the network and not included in the standby list as the target cellular station; and the user equipment sending a second RRC connection request to the target cellular station.

As will be seen more clearly from the detailed description following below, the claimed communication system for performing a location registration procedure. The communication system includes a network having multiple cellular stations; and a user equipment including a network connectivity unit configured to send RRC connection requests to the network or receive response messages from the network; a scanning unit configured to scan the network for acquiring the multiple cellular stations; a memory unit for storing a standby list; and a processing component configured to select a first cellular station among the multiple cellular stations as a target cellular station; instruct the network connectivity unit to send a first RRC connection request to the target cellular station; add the first cellular station to the standby list if the network connectivity unit does not receive a response message from the target cellular station when a predetermined period has elapsed following the sending of the RRC connection request, select a second cellular station among the multiple cellular stations as the target cellular station; and instruct the network connectivity unit to send a second RRC connection request to the target cellular station.

### Brief Description of the Drawings

In the following, the invention is further illustrated by way of example, taking reference to the accompanying drawings.
FIG. 1 is a flowchart illustrating a prior art method of performing location registration procedures in an LTE system.
FIG. 2 is a flowchart illustrating a prior art method of performing location registration procedures in a UMTS system.
FIGs. 3 and 4 are flowcharts illustrating methods of performing location registration procedures according to embodiments of the present invention.
FIG. 5 is a functional diagram illustrating an embodiment of a user equipment configured to carry out the present method illustrated in FIG. 3 or FIG. 4.

### Detailed Description

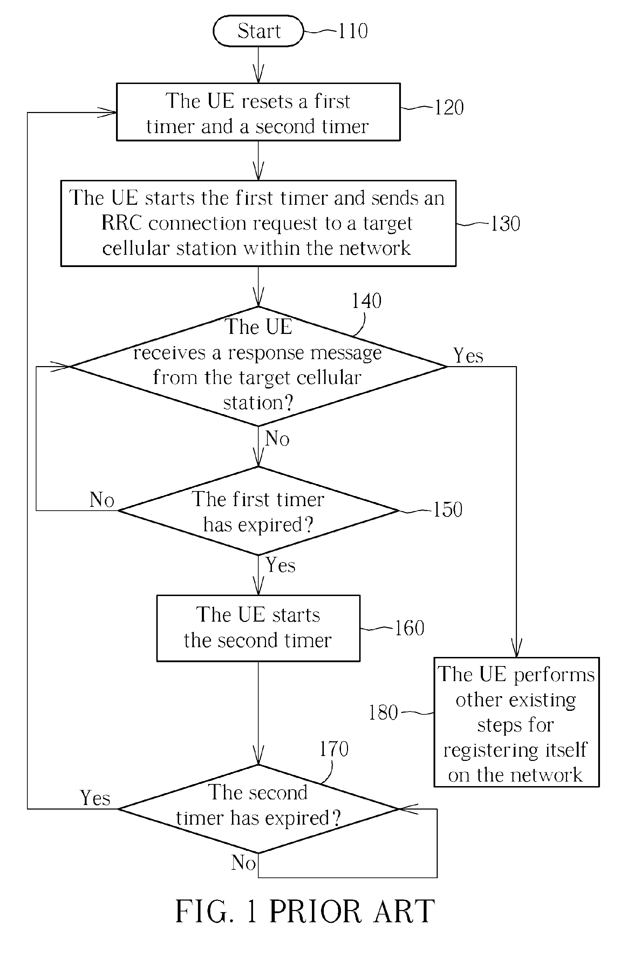

FIG. 1 is a flowchart illustrating a prior art method of performing location registration procedures in an LTE system and includes the following steps:

| | |
|---|---|
| Step 110: | start. |
| Step 120: | the UE resets a first timer and a second timer; execute step 130. |
| Step 130: | the UE starts the first timer and sends a radio resource control (RRC) connection request to a target cellular station within the network; execute step 140. |
| Step 140: | determine if the UE receives a response message from the target cellular station; if yes, execute step 180; if no, execute step 150. |
| Step 150: | determine if the first timer has expired; if yes, execute step 160; if no, execute step 140. |
| Step 160: | the UE starts the second timer; execute step 170. |
| Step 170: | determine if the second timer has expired; if yes, execute step 120; if no, execute step 170. |
| Step 180: | the UE performs other existing steps for registering itself on the network. |

In the prior art method depicted in FIG. 1, after sending the RRC connection request but no response from the network during a predetermined period of time (controlled by the first timer) in steps 130-170, the UE is configured to wait for a predetermined period of time (controlled by the second timer) and then restart the location registration procedure by sending the RRC connection request again to the target cellular station of the network. In other words, the UE is configured to re-establish RRC connection with the same cellular station of the network over and over again until a network response can be received.

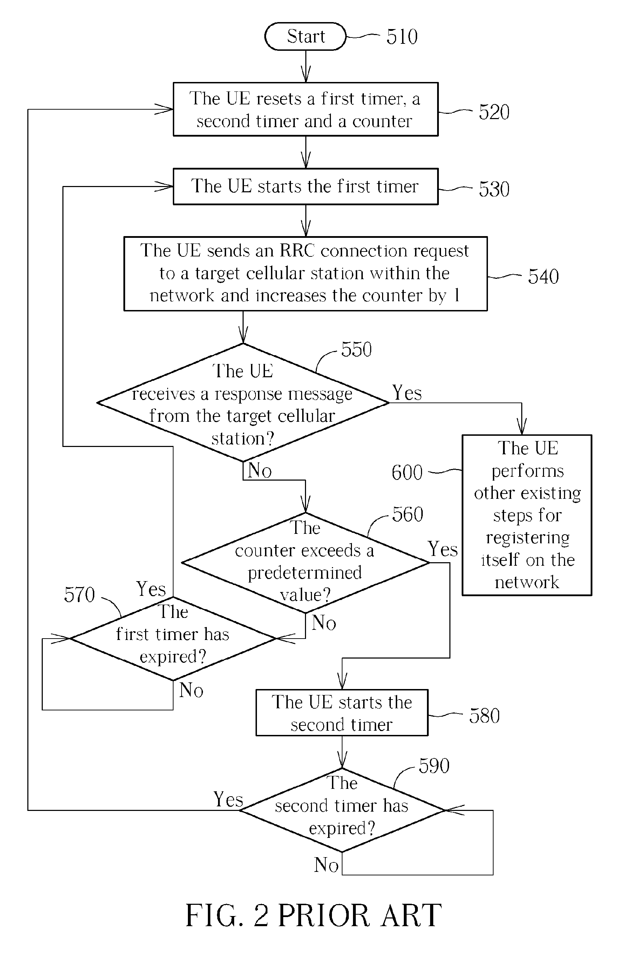

FIG. 2 is a flowchart illustrating another prior art method of performing location registration procedures in a UMTS system and includes the following steps:

| | |
|---|---|
| Step 510: | start. |
| Step 520: | the UE resets a first timer, a second timer and a counter; execute step 530. |
| Step 530: | the UE starts the first timer; execute step 540. |
| Step 540: | the UE sends an RRC connection request to a target cellular station within the network and increases the counter by 1; execute step 550. |
| Step 550: | determine if the UE receives a response message from the target cellular station; if yes, execute step 600; if no, execute step 560. |
| Step 560: | determine if the counter exceeds a predetermined value; if yes, execute step 580; if no, execute step 570. |
| Step 570: | determine if the first timer has expired; if yes, execute step 530; if no, execute step 570. |
| Step 580: | the UE starts the second timer; execute step 590. |
| Step 590: | determine if the second timer has expired; if yes, execute step 520; if no, execute step 590. |
| Step 600: | the UE performs other existing steps for registering itself on the network. |

In the prior art method depicted in FIG. 2, after periodically (controlled by the first timer) sending the RRC connection request N times (determined by the counter) but no response from the network in steps 530-570, the UE is configured to wait for a predetermined period of time (controlled by the second timer) and then restart the location registration procedure by periodically sending the RRC connection request for another N times to the target cellular station of the network. In other words, the UE is configured to re-establish RRC connection with the same cellular station of the network over and over again until a network response can be received.

As previously stated, if the user of the UE is attending a football game, a live concert, firework celebrations, or other events which involve many participants, a cellular station may receive many RRC connection requests from different UEs during the same period, thereby being too busy to respond each UE immediately. Since such events normally last for a period of time, the cellular station to which the UE repeatedly sends RRC connection requests may remain busy and cause the location registration procedure to fail for a while.

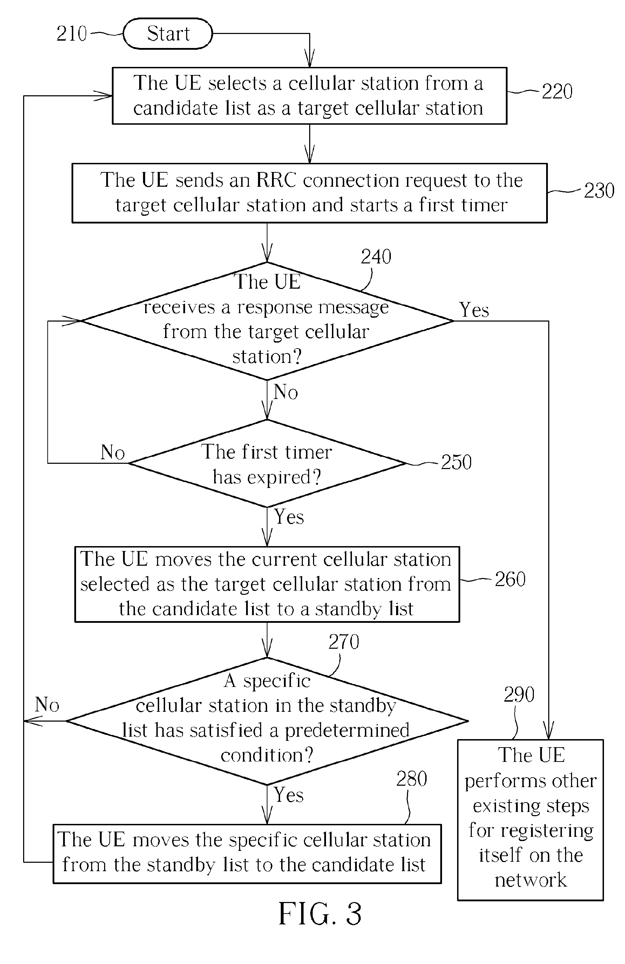

FIG. 3 is a flowchart illustrating a method of performing location registration procedures according to a first embodiment of the present invention. The flowchart in FIG. 3 includes the following steps:

| | |
|---|---|
| Step 210: | start. |
| Step 220: | the UE selects a cellular station from a candidate list as a target cellular station; execute step 230. |
| Step 230: | the UE sends an RRC connection request to the target cellular station and starts a first timer; execute step 240. |
| Step 240: | determine if the UE receives a response message from the target cellular station; if yes, execute step 270; if no, execute step 250. |
| Step 250: | determine if the first timer has expired; if yes, execute step 260; if no, execute step 240. |
| Step 260: | the UE moves the current cellular station selected as the target cellular station from the candidate list to a standby list; execute step 270. |
| Step 270: | determine if a specific cellular station in the standby list has satisfied a predetermined condition; if yes, execute step 280; if no, execute step 220. |
| Step 280: | the UE moves the specific cellular station from the standby list to the candidate list; execute step 220. |
| Step 290: | the UE performs other existing steps for registering itself on the network. |

Before transferring any application data or completing any signaling procedures, the UE needs to make the transition from an RRC idle mode to an RRC connected mode. This RRC connection establishment procedure, as illustrated by steps 220-280 in FIG. 3, is always initiated by the UE, but can be triggered by either the UE or the network in step 210. For example, the UE may trigger the RRC connection establishment procedure if the end-user starts an application to browse the Internet, or to send an email. Similarly, the UE may trigger the RRC connection establishment procedure if the UE moves into a new tracking/routing/location area and has to complete the tracking/routing/location area update signaling procedure. The network may trigger the RRC connection establishment procedure by sending a paging message which allows the delivery of an incoming short message service (SMS) or notification of an incoming voice call.

In step 220, the UE may acquire the candidate list in any form by scanning multiple cellular stations within the network. In an embodiment, the cellular station selected as the target cellular station in step 220 may be the one having the best signal quality among multiple cellular stations in the candidate list. The UE may update the candidate list and the corresponding standby list in step 260 or 280, which will be explained in subsequent paragraphs.

In step 230, the UE is configured to send the RRC connection request to the target cellular station and starts the first timer. The expiry period of the first timer may be determined by the parameter T300 defined in related 3rd Generation Partnership Project (3GPP) technical specifications, such as TS 25.331, TS 24.008, TS 36.331 or TS 24.301. The setting of the parameter T300 determines how long the UE waits for the network response after sending the RRC connection request and can be set to one of the following values: 400, 600, 800, 1000, 1200, 1400, 1600, 1800, 2000, 3000, 4000, 6000, 8000 ms.

If it is determined in steps 220-250 that the RRC establishment procedure fails when the first timer expires before receiving a corresponding response message from the target cellular station, the UE is configured to move the current cellular station selected as the target cellular station from the candidate list to the standby list in step 260. A cellular station included in the standby list indicates that a prior attempt to establish RRC connection between this cellular station and the UE has failed recently. Under such circumstance, an immediate attempt to establish another RRC connection between this cellular station and the UE may very likely be unsuccessful.

If it is determined in step 270 that the specific cellular station in the standby list has satisfied the predetermined condition, the UE is then configured to move the specific cellular station from the standby list to the candidate list in step 280.

In one embodiment, the predetermined condition may be determined by a second timer. More specifically, the UE may further start the second timer when adding the specific cellular station to the standby list, and the predetermined condition is satisfied when the second timer has expired.

In another embodiment, the predetermined condition may be determined by a counter. More specifically, the UE may further activate the counter for recording how many times any cellular station in the candidate list has been selected after adding the specific cellular station to the standby list, and the predetermined condition is satisfied when the value of the counter exceeds a predetermined limit.

After step 270 or 280, the present method loops back to step 220 for attempting to establish an RRC connection between another cellular station in the candidate list and the network. If the UE can receive a response message from the current target cellular station in step 240, step 290 is then executed so that the UE may perform other existing steps defined in related 3GPP specifications (such as TS 25.331, TS 24.008, TS 36.331 or TS 24.301)for registering itself on the network. If the UE still fails to receive any response message from the current target cellular station in step 240, all available cellular stations in the candidate list may be sequentially selected until the RRC connection establishment procedure is successful. Therefore, the method according to the first embodiment of the present invention can improve the success rate of location registration procedures when certain cells within the network are busy.

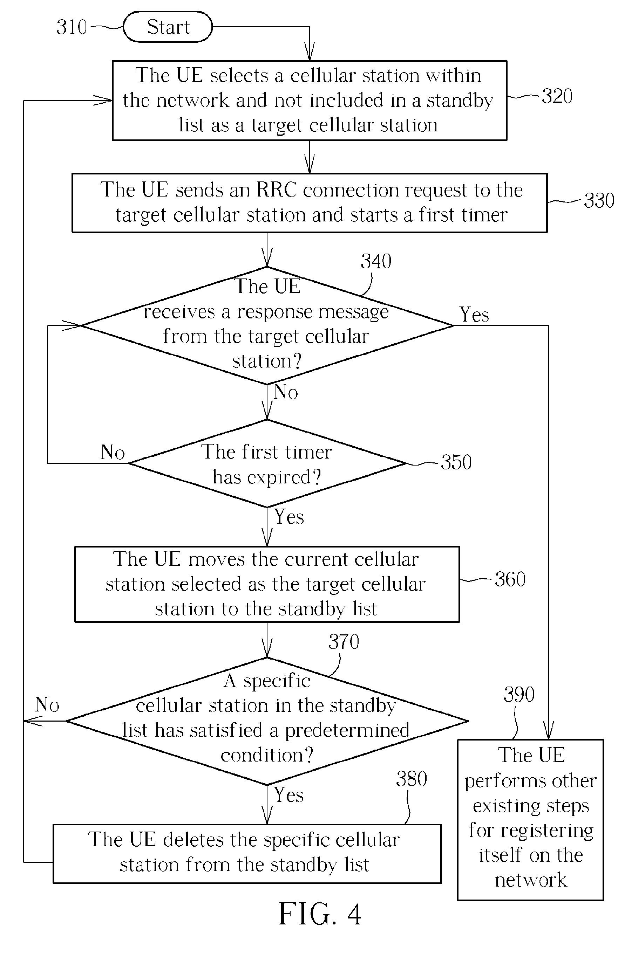

FIG. 4 is a flowchart illustrating a method of performing location registration procedures according to a second embodiment of the present invention. The flowchart in FIG. 4 includes the following steps:

| | |
|---|---|
| Step 310: | start. |
| Step 320: | the UE selects a cellular station within the network and not included in a standby list as a target cellular station; execute step 330. |
| Step 330: | the UE sends an RRC connection request to the target cellular station and starts a first timer; execute step 340. |
| Step 340: | determine if the UE receives a response message from the target cellular station; if yes, execute step 390; if no, execute step 350. |
| Step 350: | determine if the first timer has expired; if yes, execute step 360; if no, execute step 340. |
| Step 360: | the UE moves the current cellular station selected as the target cellular station to the standby list; execute step 370. |
| Step 370: | determine if a specific cellular station in the standby list has satisfied a predetermined condition; if yes, execute step 380; if no, execute step 320. |
| Step 380: | the UE deletes the specific cellular station from the standby list; execute step 320. |
| Step 390: | the UE performs other existing steps for registering itself on the network. |

In the flowchart illustrated in FIG. 4, steps 310, 330-350, 370 and 390 may be execute in the same manner as the corresponding steps 210, 230-250, 270 and 290 in the flowchart illustrated in FIG. 3. However, the second embodiment of the present invention differs from the first embodiment of the present invention in the method of selecting the target cellular station (steps 320, 360 and 380).

According to the first embodiment of the present invention, the UE may acquire the candidate list in any form by scanning multiple cellular stations within the network in step 220, and then update the candidate list and the corresponding standby list in step 260 or 280. According to the second embodiment of the present invention, the UE may perform real-time scan on the network and verify if a scanned cellular station is included in the standby list in step 320, and then update the standby list in step 360 or 380. Therefore, the method according to the second embodiment of the present invention can also improve the success rate of location registration procedures when certain cells within the network are busy.

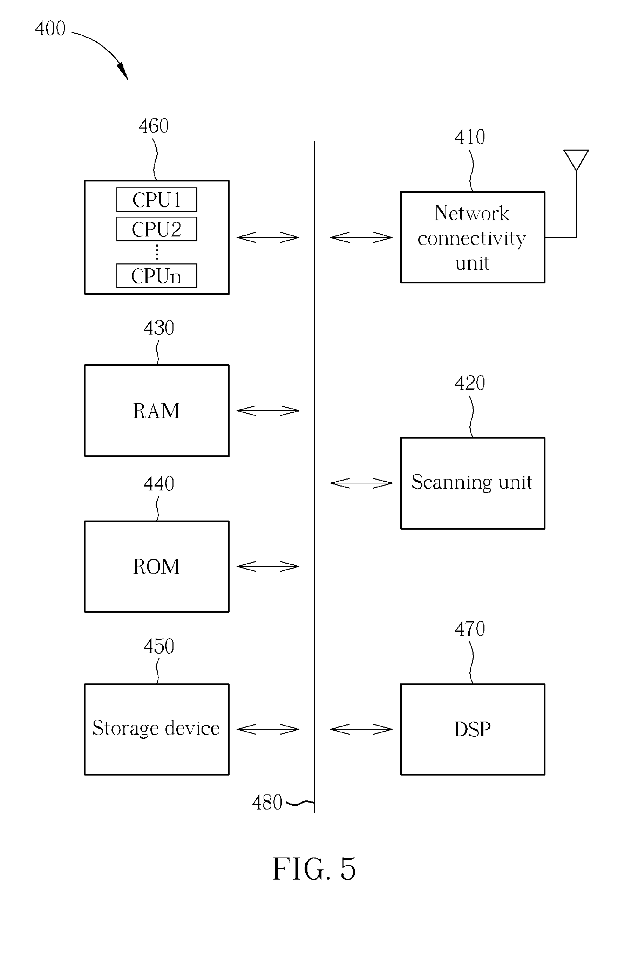

In the present invention, the UE may include transportable electronic devices, such as mobile telephones, personal digital assistants, handheld, tablet, nettop, or laptop computers, or other devices with similar telecommunication capabilities. FIG. 5 is a functional diagram illustrating an embodiment of a UE 400 configured to carry out the present method illustrated in FIG. 3 or FIG. 4. The UE 400 includes a network connectivity unit 410, a scanning unit 420, random access memory (RAM) 430, read only memory (ROM) 440, a storage device 450, a processing component 460, and a digital signal processor (DSP) 470. These components might communicate with one another via a bus 480. In some cases, some of these components may not be present or may be combined in various combinations with one another or with other components not shown. These components might be located in a single physical entity or in more than one physical entity. Any actions described herein as being taken by the processing component 460 may be taken by the processing component 460 alone or by the processing component 460 in conjunction with one or more components shown or not shown in the drawing, such as with the DSP 470. Although the DSP 470 is shown as a separate component, the DSP 470 might be incorporated into the processing component 460.

The network connectivity unit 410 may include one or multiple modems, modem banks, Ethernet devices, universal serial bus (USB) interface devices, serial interfaces, token ring devices, fiber distributed data interface (FDDI) devices, wireless local area network (WLAN) devices, radio transceiver devices such as code division multiple access (CDMA) devices, GSM/UMTS/LTE radio transceiver devices, worldwide interoperability for microwave access (WiMAX) devices, and/or other well-known devices for connecting to other network entities. The network connectivity unit 410 allows the processing component 460 to communicate with the Internet or one or more telecommunications networks (not shown) for sending the RRC connection request or receiving network response messages.

The scanning unit 420 is configured to scan all available cellular stations within the network and select one of the scanned cellular stations as the target cellular station according to the candidate list or the standby list in step 220 or 320.

The RAM 430 may be used to store volatile data and instructions that are executed by the processing component 460. The ROM 440 may be used to store instructions and data that are read during execution of the instructions. The storage device 450 may include various disk-based systems such as hard disk, floppy disk, or optical disk and may be used to store programs that are loaded into the RAM 430 when such programs are selected for execution. Access to both the RAM 430 and the ROM 440 is typically faster than access to the storage device 450, but the storage device 250 can provide larger memory capacity. In the present invention, the candidate list, the standby list and the settings of N and the first timer may be stored in the available memory space of the RAM 430, ROM 440 and/or the storage device 450.

The processing component 460 is configured to execute instructions, codes, computer programs, or scripts which may be accessed from the network connectivity units 420, RAM 430, ROM 440, or the storage device 450, such as performing steps 230-280 or 330-380. The processing component 460 may include one or multiple processors CPU1∼CPUn for executing the present method simultaneously, serially, or otherwise by one processor.

In the present invention, when an attempt to establish an RRC connection between a first cellular station within the network and the UE fails, the UE is configured to perform another RRC connection establishment procedure on a second cellular station within the network. When a first RRC connection establishment procedure fails due to no response from a specific cellular station within the network, the specific cellular station is excluded in subsequent RRC connection attempts for a predetermined period or after a predetermined number of another RRC connection attempts have been made. Therefore, when certain cells within the network are busy, the present invention can improve the success rate of location registration procedures by requesting RRC connection with other available and less busy cells within the network.

## Claims

1. A method of performing a location registration procedure on a user equipment which is configured to acquire a candidate list by scanning multiple cellular stations within a network and selecting a first cellular station from the candidate list as a target cellular station, the method **characterized in that** it comprises the steps of:
the user equipment sending a first radio resource control (RRC) connection request to the target cellular station;
the user equipment moving the first cellular station from the candidate list to a standby list if the user equipment does not receive a response message from the target cellular station when a first predetermined period has elapsed following the sending of the RRC connection request;
the user equipment selecting a second cellular station from the candidate list as the target cellular station; and
the user equipment sending a second RRC connection request to the target cellular station.

2. The method of claim 1, **further characterized by** comprising the further step of:
the user equipment moving the first cellular station from the standby list back to the candidate list when a second predetermined period has elapsed following the first cellular station moving from the candidate list to the standby list.

3. The method of claim 1, **further characterized by** comprising the further step of:
the user equipment moving the first cellular station from the standby list back to the candidate list following the first cellular station moving from the candidate list to the standby list and other M cellular stations from the candidate list have been selected as the target cellular station, wherein M is a positive integer.

4. The method of any of claims 1-3, **further characterized by** comprising the further step of:
the user equipment performing steps defined in a 3rd Generation Partnership Project (3GPP) technical specifications TS 25.331, TS 24.008, TS 36.331 or TS 24.301 for registering itself on the network when receiving the response message from the target cellular station.

5. A method of performing a location registration procedure **characterized by** comprising the steps of:
a user equipment selecting a first cellular station within a network and not included in a standby list as a target cellular station;
the user equipment sending a first RRC connection request to the target cellular station;
the user equipment adding the first cellular station to the standby list if the user equipment does not receive a response message from the target cellular station when a first predetermined period has elapsed after sending the RRC connection request;
the user equipment selecting a second cellular station within the network and which is not included in the standby list as the target cellular station; and
the user equipment sending a second RRC connection request to the target cellular station.

6. The method of claim 5, **further characterized by** comprising the further step of:
the user equipment removing the first cellular station from the standby list when a second predetermined period has elapsed following the addition of the first cellular station to the standby list.

7. The method of claim 5, **further characterized by** comprising the further step of:
the user equipment removing the first cellular station from the standby list following the addition of the first cellular station to the standby list and other M cellular stations within the network have been selected as the target cellular station, wherein M is a positive integer.

8. The method of any of claims 5-7, **further characterized by** comprising the further step of:
the user equipment performing steps defined in a 3GPP technical specifications TS 25.331, TS 24.008, TS 36.331 or TS 24.301 for registering itself on the network.

9. A communication system for performing a location registration procedure comprising a network having multiple cellular stations and a user equipment including a network connectivity unit configured to send RRC connection requests to the network or receive response messages from the network, a scanning unit configured to scan the network for acquiring the multiple cellular stations, and a memory unit for storing a standby list, the communication system **characterized by** a processing component configured to:
select a first cellular station among the multiple cellular stations as a target cellular station;
instruct the network connectivity unit to send a first RRC connection request to the target cellular station;
add the first cellular station to the standby list if the network connectivity unit does not receive a response message from the target cellular station when a predetermined period has elapsed after sending the RRC connection request,
select a second cellular station among the multiple cellular stations as the target cellular station; and
instruct the network connectivity unit to send a second RRC connection request to the target cellular station.
